# EUROPEAN PATENT SPECIFICATION

(11) **EP 3 688 381 B1**
(45) Date of publication and mention of the grant of the patent: **04.08.2021**
(21) Application number: 18749128.7
(22) Date of filing: 26.06.2018
(51) Int. Cl.: F24S 25/16, F24S 25/11, F24S 25/636

(54) **PHOTOVOLTAIC PLANT WITH PANEL SUPPORT STRUCTURE**
FOTOVOLTAISCHE ANLAGE MIT PANEELSTÜTZSTRUKTUR
CENTRALE PHOTOVOLTAÏQUE DOTÉE DE STRUCTURE DE SUPPORT DE PANNEAUX

(30) Priority: 25.09.2017 IT 201700107051
(43) Date of publication of application: 05.08.2020
(73) Proprietor: BASIC S.R.L., 85042 Lagonegro (Potenza) (IT)
(72) Inventor: Iannuzzi, Maurizio, 42028 Poviglio (RE) (IT); Di Tela, Giuseppe, 42028 Poviglio (RE) (IT)
(74) Representative: Monelli, Alberto
(86) International application number: PCT/IB2018/054692
(87) International publication number: WO 2019/058187

(56) References cited:
- DE-U1-202010 001 763
- JP-A- 2003 234 492
- US-A- 5 505 788
- US-A1- 2016 336 895

## Description

### Technical field

The present invention relates to a photovoltaic plant and in particular to the use of a particular support in a photovoltaic plant.

### Background art

A photovoltaic plant is known in which the panels are arranged in different rows. Typically a space is interposed between one row and another for minimising shading. For the positioning it is known to use a metal frame above which the panels are connected. An additional removable ballast is also placed on the metal frame comprising, for example, concrete elements. This is for the purpose of contrasting the lifting action of the wind. In fact, panels are arranged inclined with respect to the horizontal plane so as to catch the sunlight better and this exposes them to the pressure of the wind. In particular, when the wind hits them from behind it exerts a lifting action that must absolutely be neutralised.

A holding element for one photovoltaic panel is also disclosed in DE202010001763U1.

### Disclosure of the invention

In this context, the technical task underpinning the present invention is to provide a photovoltaic plant able to optimise the structural resistance of the plant to the strain of the wind.

A further object of the present invention is to accelerate assembly.

The defined technical task and the specified aims are substantially achieved by a photovoltaic plant according to claim 1. Specific embodiments are defined by the technical characteristics set forth in one or more of the appended claims.

### Brief description of drawings

Further characteristics and advantages of the present invention will become more apparent from the indicative and thus non-limiting description of a preferred, but not exclusive, embodiment of a photovoltaic plant, as illustrated in the appended drawings, in which:

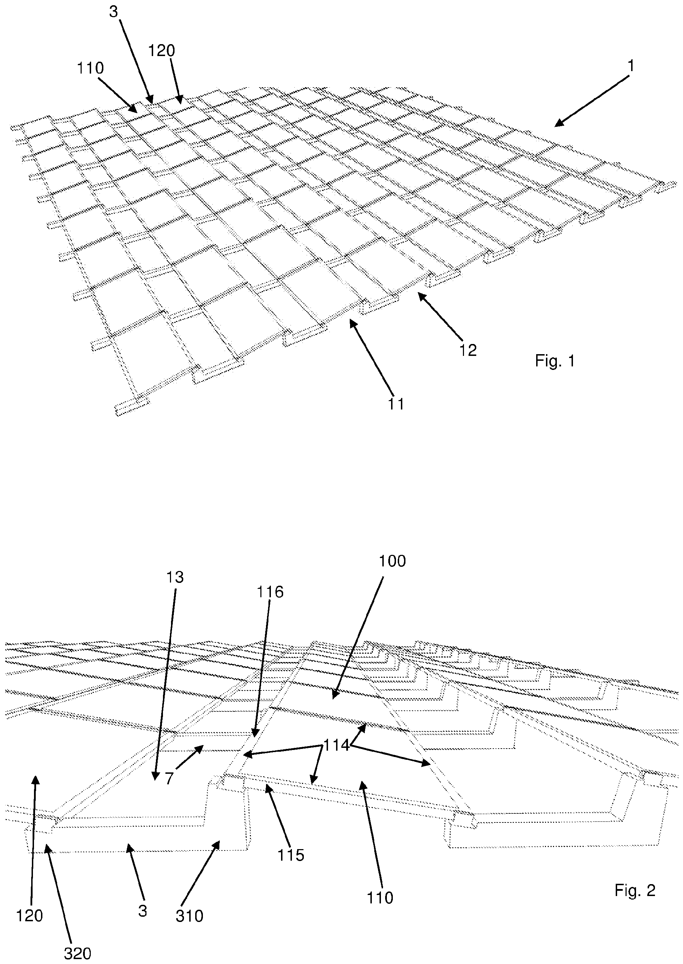

- figure 1 shows a perspective view of a plant according to the present invention;

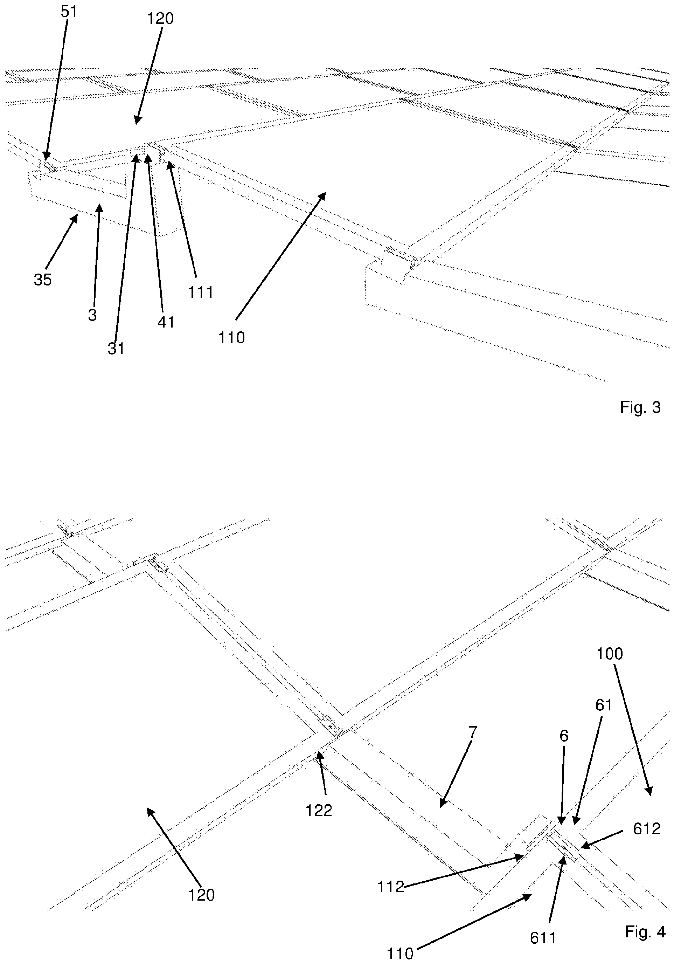

- figures 2, 3 and 4 show portions of a plant of figure 1 from various angles;

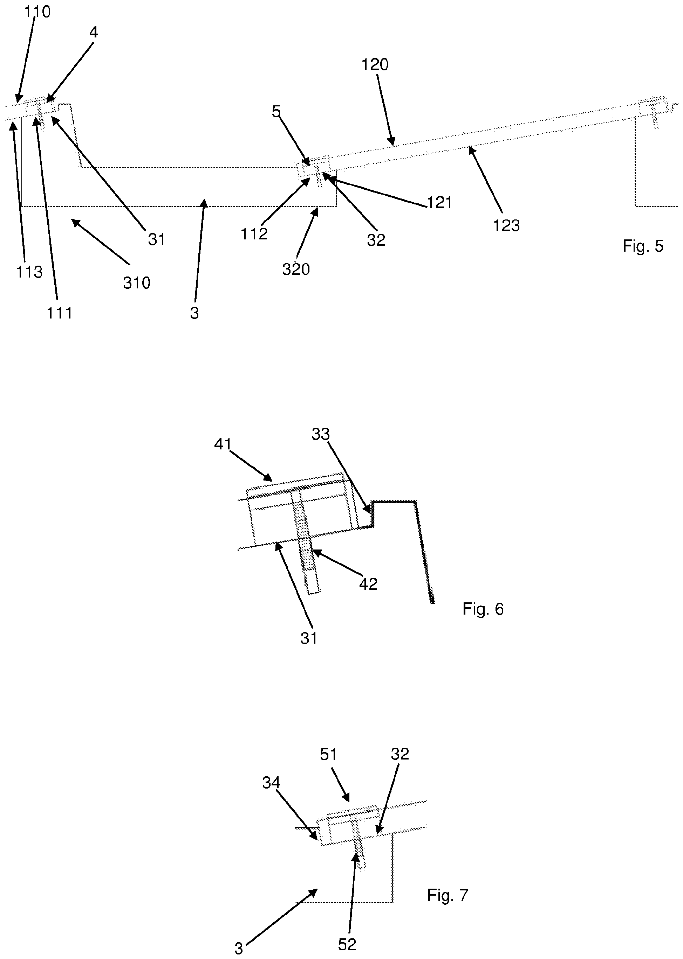

- figure 5 shows a side view of the plant of figures 1-4.
- figures 6 and 7 show enlarged details of figure 5.

### Detailed description of preferred embodiments of the invention

A photovoltaic plant is denoted in the appended figures by reference number 1. It allows the production of electrical energy by exploiting solar energy. It can be used, for example, on a roof of a building or in a field.

The plant 1 comprises:
- a first photovoltaic panel 110;
- a second photovoltaic panel 120.

The first panel 110 is placed along a first row 11 of photovoltaic panels.

The second panel 120 is placed along a second row 12 of photovoltaic panels.

Advantageously other rows are also present. Both the first and the second row 11, 12 are typically composed of a plurality of photovoltaic panels. The panels of the first row 11 extend reciprocally flanked. The panels of the first row 11 preferably have the same inclination with respect to the horizontal. An imaginary plane can therefore be identified by the panels of the first row 11. The same can be said for the panels of the second row 12. Between the first and the second row 11, 12 there is a space 13. It serves to minimise shading. It defines a straight corridor. Such corridor is useful for inspection and maintenance purposes.

Appropriately the minimum distance between the first and the second panel 110, 120 is greater than 20 centimetres.

The plant 1 comprises a first support 3 for supporting both the first panel 110 and the second panel 120. Such first support 3 extends between the first and the second row 11, 12. It therefore connects the first and the second row 11, 12. This reinforces the plant 1, notably increasing the resistance to the wind thereof. In particular, tests performed by the Applicant have highlighted that with such an expedient, the resistance of the panel connected to such first support 3 against tipping following the action of the wind is very high and no longer constitutes a weak zone of the plant 1. This is so true that the most delicate zone for preventing damage is the connection between the first panel 110 and the first support 3.

The first support 3 is also a ballast connected to the first and the second panels 110, 120. The ballast is integrated into the first support 3 and defines therewith a same monolithic body - it is not an additional element.

The ballast is not therefore removable from the first support 3. The first support 3 is therefore a self-ballasting structure.

The first support 3 is a supporting single block for the first and the second panel 110, 120, defines a ballast and is a structural joining and reinforcing element between the first and the second row 11, 12.

The first support 3 is made of concrete (or of cementitious materials in general).

In particular, it is not a metal frame. It defines a body having a uniform density. Concrete both confers the structural characteristics that the first support 3 must have and performs the ballast function.

The first support 3 comprises at a first end 310 thereof a first portion 31 for supporting the first panel 110. The first support 3 comprises at a second end 320 thereof a second portion 32 for supporting the second panel 120.

The first portion 31 is at a greater height than the second portion 32. This is a consequence of the inclination of the photovoltaic panels of the plant (to optimise the angle of incidence of the solar rays).

Preferably the first and the second portion 31, 32 are inclined with respect to a horizontal plane by an angle comprised between 3° and 40°.

Advantageously the first and the second portion 31, 32 have the same inclination with respect to the horizontal plane. Such inclination is preferably fixed and predefined. However, the first support 3 can be chosen as preferred according to the desired inclination.

The first and the second portion 31, 32 are part of a same monolithic body (that also defines the ballast).

Advantageously the plant 1 comprises connecting means 4 of the first support 3 and the first panel 110. Appropriately they allow a removable connection. The connecting means 4 comprise a first hook 41 (also called a "brace" in technical jargon). The first hook 41 is constrained to the first support 3, in particular at the first portion 31. The first hook 41 is constrained to the first support 3 preferably through threaded connecting means 42 or a press-fit engagement. The first hook 41 therefore retains the first panel 110.

The first support 3 also comprises a relief edge 33 which delimits the first portion 31.

The first panel 110 comprises a frame 114 comprising two converging side flanks 115, 116. The connecting means 4 constrain one flank 115 of said two flanks 115, 116 while the relief edge 33 faces a portion of the other flank 116 of said two flanks 115, 116.

Appropriately the plant 1 comprises connecting means 5 of the first support 3 and the second panel 120.

The connecting means 5 comprise at least a second hook 51. The second hook 51 is constrained to the first support 3, in particular at the second portion 32. The second hook 51 is constrained to the first support 3 preferably through threaded connecting means. The second hook 51 therefore retains the second panel 120.

The first support 3 also comprises a shoulder 34 which delimits the second portion 32 and extends between the top and bottom thereof. It abuts the second panel 120 at the bottom.

The first support 3 has a preponderant longitudinal direction. Such preponderant longitudinal direction extends along a direction that connects the first and the second row 11, 12. The first support 3 has a width that is greater than 2 centimetres (preferably comprised between 2 and 7 centimetres), evaluated horizontally in the orthogonal direction to the preponderant longitudinal direction.

The first support 3 comprises a bottom 35 that rests on an external support (typically the ground or the roof). It is free from anchoring means with such external support. In fact, the stable positioning of the first support 3 is entrusted to the ballast. The first support 3 operates on flat surfaces.

The first panel 110 is substantially a parallelepiped and comprises a lower face 113 in turn comprising a first and a second angular zone 111,112; the second panel 120 is substantially a parallelepiped and comprises a lower face 123 in turn comprising a first and a second angular zone 121,122. The plant 1 comprises a second support 7 that connects the first and the second panel 110, 120. The first support 3 acts as a support for the first angular zone 111 of the lower face 113 of the first panel 110 and for the first angular zone 121 of the lower face 123 of the second panel 120. The second support 7 acts as a support for the second angular zone 112 of the lower face 113 of the first panel 110 and the second angular zone 122 of the lower face 123 of the second panel 120. Between one row and another of photovoltaic panels there is the same number of supports as the number of photovoltaic panels plus one unit. Appropriately each photovoltaic panel of the first row 11 is connected to a photovoltaic panel of the second row 12 through a support having one or more of the features previously described for the first support 3.

The previous indications for the first support 3 can be repeated for the second support 7 or for any other support that connects a panel of the first and of the second row 11, 12. The plant 1 comprises a plurality of supports, identical to each other, that extend between the panels of the first and the second row 11, 12.

With reference to the appended figures, advantageously the second support 7 contributes to sustaining an additional photovoltaic panel 100 adjacent to the first panel 110 and placed along the first row 11 (in a solution not illustrated this could also be repeated for the first support 3).

For this purpose, connecting means 6 are also involved. In fact, in that case the connecting means 6 comprise an additional hook 61 that connects the second support 7 both with the first panel 110 and with the additional panel 100. The additional hook 61 in that case may comprise:
- a first arm 611 that retains the first panel 110;
- a second arm 612 that retains the additional panel 100.

Appropriately the weight of the first panel 110 (or of the second panel 120) is only and exclusively distributed on the first support 3, on the second support 7 and on another two identical supports to the first and the second support 3, 7. Appropriately, every photovoltaic panel of the plant 1 is exclusively sustained by four identical supports to the first support 3.

The present invention provides important advantages.

First of all, it allows the structural resistance of the plant to be optimised, in particular resistance to wind that tends to lift and tip the panels. For this purpose, the Applicant has performed CFD computational fluid dynamic analyses and FEM structural analyses. Secondly, it allows quick assembly of the plant by optimising the components. This translates into a reduction in material costs and a reduction in assembly costs.

The invention as it is conceived is susceptible to numerous modifications and variants, all falling within the scope of the inventive concept characterising it.

## Claims

1. A photovoltaic plant, comprising:
- a first row (11) of photovoltaic panels comprising a first panel (110);
- a second row (12) of photovoltaic panels comprising a second panel (120);
- a first support (3) for supporting both the first panel (110) and the second panel (120) which extends between the first and the second rows (11, 12);
said first support (3) being a ballast of concrete or of cementitious materials connected to the first and the second panels (110, 120); wherein between the first and the second row (11, 12) there is a space (13) defining a straight corridor for inspection and maintenance purposes;
the first support (3) comprising at a first end (310) thereof a first portion (31) for supporting the first panel (110) and at a second end (320) thereof a second portion (32) for supporting the second panel (120); the first portion (31) being at a greater height than the second portion (32); the first and the second portions (31, 32) being part of a same monolithic body;
**characterised in that** the first support (3) has a preponderant longitudinal direction extending along a direction that connects the first and the second row (11, 12).

2. The plant according to claim 1, wherein the first and the second portions (31, 32) are inclined with respect to a horizontal plane by an angle comprised between 3° and 40°.

3. The plant according to any one of the previous claims, wherein the first support (3) comprises a shoulder (34) which delimits the second portion (32) and extends between top and bottom thereof, abutting the second panel (120) at the bottom.

4. The plant according to any one of the previous claims, wherein it comprises connecting means (4) of the first support (3) and the first panel (110) located at said first portion (31); the first support (3) further comprising a relief edge (33) which delimits the first portion (31); the first panel (110) comprising a frame (114) in turn comprising two converging side flanks (115, 116); the connecting means (4) constrain one flank (115) of said two flanks (115, 116) while the relief edge (33) faces a portion of the other flank (116) of said two flanks (115, 116).

5. The plant according to any one of the preceding claims, wherein the first panel (110) is substantially a parallelepiped and comprises a lower face (113) in turn comprising a first and a second angular zone (111, 112); the second panel (120) is substantially a parallelepiped and comprises a lower face (123) in turn comprising a first and a second angular zone (121, 122); said plant (1) comprising a second support (7) which connects the first and the second panels (110, 120); the first support (3) supporting the first angular zone (111) of the lower face (113) of the first panel (110) and the first angular zone (121) of the lower face (123) of the second panel (120); the second support (7) supporting the second angular zone (112) of the lower face (113) of the first panel (110) and the second angular zone (122) of the lower face (123) of the second panel (120).

6. The plant according to claim 5, wherein the second support (7) contributes to supporting an additional photovoltaic panel (100) adjacent to the first panel (110) and located along the first row (11).

7. The plant according to any one of the preceding claims, wherein the first support (3) has a width that is comprised between 2 and 7 centimetres, evaluated horizontally in the orthogonal direction to the preponderant longitudinal direction.

8. The plant according to any one of the preceding claims, wherein the minimum distance between the first and the second panel (110, 120) is greater than 20 centimetres.

## Patentansprüche

1. Photovoltaikanlage, umfassend:
- eine erste Reihe (11) von Photovoltaikpaneelen, umfassend ein erstes Paneel (110);
- eine zweite Reihe (12) von Photovoltaikpaneelen, umfassend ein zweites Paneel (120);
- eine erste Stütze (3) zum Abstützen sowohl des ersten Paneels (110) als auch des zweiten Paneels (120), das sich zwischen der ersten und der zweiten Reihe (11, 12) erstreckt; wobei die erste Stütze (3) ein Ballast aus Beton oder zementhaltigen Materialien ist, das mit dem ersten und dem zweiten Paneel (110, 120) verbunden ist; wobei zwischen der ersten und der zweiten Reihe (11, 12) ein Raum (13) vorhanden ist, der einen geraden Gang für Inspektions- und Wartungszwecke definiert;
wobei die erste Stütze (3) an einem ersten Ende (310) davon einen ersten Abschnitt (31) zum Abstützen des ersten Paneels (110) und an einem zweiten Ende (320) davon einen zweiten Abschnitt (32) zum Abstützen des zweiten Paneels (120) umfasst; wobei sich der erste Abschnitt (31) auf einer größeren Höhe als der zweite Abschnitt (32) befindet; wobei der erste und der zweite Abschnitt (31, 32) Teil desselben monolithischen Körpers sind;
**dadurch gekennzeichnet, dass** die erste Stütze (3) eine überwiegende Längsrichtung aufweist, die sich entlang einer Richtung erstreckt, die die erste und die zweite Reihe (11, 12) verbindet.

2. Anlage nach Anspruch 1, wobei der erste und der zweite Abschnitt (31, 32) gegenüber einer horizontalen Ebene um einen Winkel zwischen 3° und 40° geneigt sind.

3. Anlage nach einem der vorhergehenden Ansprüche, wobei die erste Stütze (3) eine Schulter (34) umfasst, die den zweiten Abschnitt (32) begrenzt und sich zwischen dessen Ober- und Unterseite erstreckt und am zweiten Paneel (120) unten anliegt.

4. Anlage nach einem der vorhergehenden Ansprüche, wobei sie Verbindungsmittel (4) der ersten Stütze (3) und des ersten Paneels (110) umfasst, die sich an dem ersten Abschnitt (31) befinden;
wobei die erste Stütze (3) ferner eine Reliefkante (33) umfasst, die den ersten Abschnitt (31) begrenzt; wobei das erste Paneel (110) einen Rahmen (114) umfasst, der wiederum zwei konvergierende Seitenflanken (115, 116) umfasst; die Verbindungsmittel (4) spannen eine Flanke (115) der beiden Flanken (115, 116) fest, während die Reliefkante (33) einem Abschnitt der anderen Flanke (116) der beiden Flanken (115, 116) zugewandt ist.

5. Anlage nach einem der vorhergehenden Ansprüche, wobei das erste Paneel (110) im Wesentlichen ein Parallelepiped ist und eine untere Fläche (113) umfasst, die wiederum einen ersten und einen zweiten Winkelbereich (111, 112) umfasst; das zweite Paneel (120) ist im Wesentlichen ein Parallelepiped und umfasst eine untere Fläche (123), die wiederum einen ersten und einen zweiten Winkelbereich (121, 122) umfasst; wobei die Anlage (1) eine zweite Stütze (7) umfasst, die das erste und das zweite Paneel (110, 120) verbindet; wobei die erste Stütze (3) den ersten Winkelbereich (111) der unteren Fläche (113) des ersten Paneels (110) und den ersten Winkelbereich (121) der unteren Fläche (123) des zweiten Paneels (120) abstützt; wobei die zweite Stütze (7) den zweiten Winkelbereich (112) der unteren Fläche (113) des ersten Paneels (110) und den zweiten Winkelbereich (122) der unteren Fläche (123) des zweiten Paneels (120) abstützt.

6. Anlage nach Anspruch 5, wobei die zweite Stütze (7) dazu beiträgt, ein zusätzliches Photovoltaikpaneel (100) neben dem ersten Paneel (110) abzustützen, das sich entlang der ersten Reihe (11) befindet.

7. Anlage nach einem der vorhergehenden Ansprüche, wobei die erste Stütze (3) eine Breite aufweist, die zwischen 2 und 7 cm liegt, horizontal in orthogonaler Richtung zur überwiegenden Längsrichtung bewertet.

8. Anlage nach einem der vorhergehenden Ansprüche, wobei der Mindestabstand zwischen dem ersten und dem zweiten Paneel (110, 120) größer als 20 cm ist.

## Revendications

1. Installation photovoltaïque, comprenant :
- une première rangée (11) de panneaux photovoltaïques comprenant un premier panneau (110) ;
- une deuxième rangée (12) de panneaux photovoltaïques comprenant un deuxième panneau (120) ;
- un premier support (3) servant à supporter à la fois le premier panneau (110) et le deuxième panneau (120) qui se prolonge entre les première et deuxième rangées (11, 12) ; ledit premier support (3) étant un ballast en béton ou en matériaux cimentaires relié aux premier et deuxième panneaux (110, 120) ; dans laquelle entre les première et deuxième rangées (11, 12) se trouve un espace (13) définissant un couloir rectiligne aux fins d'inspection et de maintenance ;
le premier support (3) comprenant à une première extrémité (310) de celui-ci une première partie (31) pour supporter le premier panneau (110) et à une deuxième extrémité (320) de celui-ci une deuxième partie (32) servant à supporter le deuxième panneau (120) ; la première partie (31) étant à une hauteur plus grande que la deuxième partie (32) ; les première et deuxième parties (31, 32) faisant partie d'un même corps monolithique ;
**caractérisée en ce que** le premier support (3) a une direction longitudinale prépondérante se prolongeant le long d'une direction reliant la première et la deuxième rangée (11, 12).

2. Installation selon la revendication 1, dans laquelle les première et deuxième parties (31, 32) sont inclinées par rapport à un plan horizontal selon un angle compris entre 3 et 40°.

3. Installation selon l'une quelconque des revendications précédentes, dans laquelle le premier support (3) comprend un épaulement (34) délimitant la deuxième partie (32) et se prolonge entre le haut et le bas de celle-ci, en venant se mettre en butée contre le deuxième panneau (120) en correspondance du bas.

4. Installation selon l'une quelconque des revendications précédentes, dans laquelle celle-ci comprend des moyens de raccordement (4) du premier support (3) et du premier panneau (110) situés en correspondance de ladite première partie (31) ;
le premier support (3) comprenant de plus un bord en relief (33) qui délimite la première partie (31) ; le premier panneau (110) comprenant un cadre (114) comprenant lui-même deux flancs latéraux convergents (115, 116) ; les moyens de raccordement (4) se mettent en prise avec un flanc (115) desdits deux flancs (115, 116) tandis que le bord en relief (33) fait face à une partie de l'autre flanc (116) desdits deux flancs (115, 116) .

5. Installation selon l'une quelconque des revendications précédentes, dans laquelle le premier panneau (110) est substantiellement parallélépipédique et comprend une face inférieure (113) comprenant elle-même une première et une deuxième zone angulaire (111, 112) ; le deuxième panneau (120) est substantiellement parallélépipédique et comprend une face inférieure (123) comprenant elle-même une première et une deuxième zone angulaire (121, 122) ; ladite installation (1) comprenant un deuxième support (7) qui relie le premier et le deuxième panneau (110, 120) ; le premier support (3) supportant la première zone angulaire (111) de la face inférieure (113) du premier panneau (110) et la première zone angulaire (121) de la face inférieure (123) du deuxième panneau (120) ; le deuxième support (7) supportant la deuxième zone angulaire (112) de la face inférieure (113) du premier panneau (110) et la deuxième zone angulaire (122) de la face inférieure (123) du deuxième panneau (120).

6. Installation selon la revendication 5, dans laquelle le deuxième support (7) contribue à supporter un panneau photovoltaïque (100) supplémentaire adjacent au premier panneau (110) et situé le long de la première rangée (11) .

7. Installation selon l'une quelconque des revendications précédentes, dans laquelle le premier support (3) comporte une largeur comprise entre 2 et 7 centimètres, évaluée horizontalement dans la direction orthogonale par rapport à la direction longitudinale prépondérante.

8. Installation selon l'une quelconque des revendications précédentes, dans laquelle la distance minimale entre le premier et le deuxième panneau (110, 120) est supérieure à 20 centimètres.
